Europäisches Patentamt

European Patent Office

Office européen des brevets

(11) Veröffentlichungsnummer : **0 141 390**
**B1**

# (12) EUROPÄISCHE PATENTSCHRIFT

(45) Veröffentlichungstag der Patentschrift :
21.01.87

(51) Int. Cl.⁴ : **C 04 B 16/10**

(21) Anmeldenummer : **84112976.0**

(22) Anmeldetag : **27.10.84**

(54) **Faserverstärkte anorganische Formkörper und ihre Herstellung.**

(30) Priorität : **05.11.83 DE 3340093**

(43) Veröffentlichungstag der Anmeldung :
**15.05.85 Patentblatt 85/20**

(45) Bekanntmachung des Hinweises auf die Patenterteilung : **21.01.87 Patentblatt 87/04**

(84) Benannte Vertragsstaaten :
**AT BE CH DE FR GB IT LI NL SE**

(56) Entgegenhaltungen :
**GB-A- 2 095 298
CHEMICAL ABSTRACTS Band 72, Nr. 10, 9. März
1970, Columbus, Ohio, USA; G. SALA "Reduction of
pilling in textile material based on polyacrylonitrile",
Seite 77, Spalte 2, Zusammenfassung Nr. 44983p**

(73) Patentinhaber : **BAYER AG
Konzernverwaltung RP Patentabteilung
D-5090 Leverkusen 1 Bayerwerk (DE)**

(72) Erfinder : **Neukam, Theo, Dr.
Rubensstrasse 14
D-4047 Dormagen (DE)**
Erfinder : **Türck, Günter, Dr.
Raphaelsweg 4
D-4047 Dormagen (DE)**
Erfinder : **Reinehr, Ulrich, Dr.
Roentgenstrasse 29
D-4047 Dormagen (DE)**
Erfinder : **Herbertz, Toni
Hauptstrasse 79
D-4047 Dormagen 3 (DE)**

## Beschreibung

Die Erfindung betrifft Formkörper mit einer durch Polyacrylnitrilfasern verstärkten Matrix aus anorganischem Material und ein Verfahren zu ihrer Herstellung.

Aus der Deutschen Offenlegungsschrift 30 12 998 ist bereits bekannt, Polyacrylnitrilfasern, die an ihrer Oberfläche mit einer kristallinen Schicht versehen sind, die von dem unlöslichen Reaktionsprodukt eines basischen Minerals mit einer Alkylsulfamidocarbonsäure gebildet wird, zur Verstärkung von Formkörpern mit einer Matrix aus anorganischem oder organischem Material einzusetzen. Obgleich beispielsweise mit Portland-Zement Formkörper hoher Festigkeit erzielt werden, ist an diesem Verfahren nachteilig, daß die Formkörperherstellung aufwendig ist und unmittelbar anschließend an die primäre Faserbehandlung erfolgen muß, wenn sich der erwünschte Erfolg einstellen soll.

Nicht ausgerüstete Polyacrylnitrilfasern sind hingegen weitgehend ungeeignet, da keine ausreichende Haftung zum anorganischen Material eintritt ; außerdem sind Polyacrylnitrilfasern in alkalischen Zementbrühen nicht ausreichend hydrolysestabil.

Es wurde nun gefunden, daß man Formkörper der genannten Art einfacher und mit guten Eigenschaften herstellen kann, wenn man als Polyacrylnitrilfasern solche einsetzt, die zuvor mit Permanganatlösungen behandelt wurden.

Mit Permanganaten behandelte Synthesefasern sind bereits bekannt, z. B. aus der Deutschen Offenlegungsschrift 2 724 952 oder der US Patentschrift 4 364 916, werden dort jedoch als schwer brennbare Fasern oder als Vorstufen für Kohlenstoffasern verwendet.

Eine Anregung, mit Permanganaten behandelte Polyacrylnitrilfasern zur Herstellung faserverstärkter Formkörper, insbesondere aus anorganischem Material einzusetzen, kann diesen Literaturstellen nicht entnommen werden.

Als Polyacrylnitrilfasern eignen sich solche aus Acrylnitrilhomo- und -copolymerisaten, wobei als Comonomere Acrylsäuremethylester und Vinylacetat in Frage kommen, insbesondere aber solche mit einem Acrylnitrilgehalt von mehr als 98 Gew.-%. Bevorzugt sind Acrylnitrilhomopolymerisate. Die Fasern haben vorzugsweise folgende Eigenschaften : einen Titer von 0,5 bis 20 dtex, eine Festigkeit von 2,0 bis 8,0 cN/dtex und einen Modul von 300 bis 1 500 cN/tex bei einer Dehnung von 12 bis 14 %.

Insbesondere haben die Fasern folgende Eigenschaften : einen Titer von 0,6 bis 6,7 dtex, eine Festigkeit von 5,0 bis 7,0 cN/dtex und einen Modul von 700 bis 1 200 cN/tex bei 12 bis 14 % Dehnung.

Geeignete Permanganate sind beispielsweise Kalium-, Ammonium-, Calcium- oder Magnesiumpermanganat.

Die Behandlung der Fasern erfolgt zweckmäßigerweise mit einer Flotte, in der das Permanganat in einer Menge von 1 bis 20 g/l gelöst ist, wobei das Flottenverhältnis (Gewichtsteile Fasern bezogen auf Gewichtsteile wäßrige Permanganatlösung) 1 : 10 bis 1 : 100 beträgt. Der pH-Wert der Flotte beträgt 1 bis 7, vorzugsweise 1 bis 2. Die Einstellung des pH-Wertes kann mit jeder nichtreduzierenden Säure vorgenommen werden.

Die Behandlung der Fasern erfolgt bei erhöhter Temperatur, vorzugsweise bei 40 bis 100 °C, und benötigt etwa 5 bis 60 Minuten. Danach werden die Fasern aus der Flotte genommen, gewaschen, auf einen Restfeuchtegehalt von 20 bis 40 Gew.-%, bezogen auf trockene Faser, gebracht, beispielsweise durch Zentrifugieren, und in dieser Form, auch nach längerer Lagerung, zur Herstellung der erfindungsgemäßen Formkörper eingesetzt. Natürlich können die Fasern auch einem Trockenprozeß bei Temperaturen von 30-170 °C ausgesetzt werden. Unter dem Elektronenmikroskop läßt sich erkennen, daß sich auf der Faseroberfläche eine geschlossene mineralische Hülle aus Manganoxiden gebildet hat. Diese Schutzschicht wird bereits bei einer Dicke von 0,05 nm gegenüber heißem Zementbrei (z. B. Portlandzement 35) wirksam, sie kann bei Bedarf auf 0,5 nm erhöht werden, entsprechend einer Gewichtszunahme der Faser bis 30 %.

Der Effekt dieser Schutzschicht manifestiert sich neben ihrer nachweisbaren Unversehrtheit (Elektronenmikroskop) auch nach einer aggressiven Zementbreibehandlung (90 °C, pH 11-13, 1 Stunde, vier Zyklen, jeweils unterbrochen durch einen Wasch- und Trockenprozeß) im völligen Erhalt der mechanischen Faserdaten, wie Titer, Festigkeit und E-Modul. Eine ungeschützte Vergleichsfaser erfährt hingegen unter den gleichen Bedingungen einen Schrumpf, bedingt durch eine Störung der Faserstruktur durch die alkalische Hydrolyse. Dieser Schrumpf führt zu einem Titeranstieg sowie Abfall der Reißfestigkeit und des E-Moduls. Die Faseroberfläche ist angeätzt und mit Riefen und Rissen versehen.

Zu verstärkende Matrices sind zum Beispiel Gips und Zement, wobei insbesondere bei der Verstärkung von Zement hervorragende Ergebnisse erzielt werden.

Die Herstellung der armierten Formkörper erfolgt zweckmäßigerweise durch Einbringen der Fasern in eine wäßrige Suspension des anorganischen Materials und Aushärten.

Dabei werden, bezogen auf trocknes anorganisches Material, 0,5 bis 5 Gew.-% an erfindungsgemäß ausgerüsteten Fasern eingesetzt, insbesondere 0,8 bis 2,4 Gew.-%.

Beispiel 1

Die Hydrolysestabilität gegenüber einer Portlandzementsuspension wurde an einer Faser aus

2

# 0 141 390

Acrylnitrilhomopolymerisat mit folgenden mechanischen Eigenschaften geprüft :

| | | |
|---|---|---|
| Titer | 1,7 | dtex |
| Reißfestigkeit | 5,0 | cN/dtex |
| E-Modul | 850 | cN/tex |
| Reißfestigkeit abs. | 8,5 | cN (pro Einzel-faser) |
| E-Modul abs. | 144 | cN (pro Einzel-faser). |

(Die E-Moduli beziehen sich auf eine Dehnung von 100 % im Kraft-Dehnungsdiagramm ; die Einspannlänge betrug 10 mm).

Aufbringen der Manganoxidschutzschicht

3 Gew.-Teile Fasern wurden 15 Minuten in einer Lösung aus 1 Gew.-Teil Kaliumpermanganat, 200 Gew.-Teilen Wasser und 3 Gew.-Teilen konz. Schwefelsäure gekocht, anschließend filtriert und bei 160 °C getrocknet. Die resultierenden schwarzbraunen Fäden weisen gemäß elektronenmikroskopischen Aufnahmen einen kompakten mineralischen Mantel einer Schichtdicke von 0,45 nm auf, was einen Titeranstieg von 1,7 auf 2,3 dtex bedingt (35 Gew.-% Zunahme). Der Mangangehalt beträgt 11 Gew.-%, bezogen auf Fasergewicht.

Mechanische Eigenschaften :

| | | |
|---|---|---|
| Titer | 2,3 | dtex |
| Reißfestigkeit | 3,6 | cN/dtex |
| E-Modul | 560 | cN/tex |
| Reißfestigkeit abs. | 8,3 | cN (pro Einzelfaser) |
| E-Modul abs. | 129 | cN (pro Einzelfaser) |

Die absoluten Werte von Festigkeit und E-Modul bleiben gegenüber der Ausgangsfaser praktisch unverändert.

Prüfung der Hydrolysestabilität in einer Suspension aus Portlandzement

6 Gew.-Teile der mineralisierten Fasern werden in eine auf 90 °C erwärmte Suspension aus 1 500 Gew.-Teilen Wasser und 160 Gew.-Teilen Portlandzement (PZ 35) eingetragen ; nach einer Stunde Verweilzeit wird filtriert, die Fasern zementfrei gewaschen und bei Raumtemperaturen getrocknet. Nach 4 Zyklen ist die Behandlung beendet. Nachstehende Tabelle zeigt die nach jedem Zyklus ermittelten mechanischen Faserwerte :

| | Titer (dtex) | Reißfestigkeit (cN/dtex) | E-Modul (cN/tex) |
|---|---|---|---|
| Ausgangswert | 2,30 | 3,6 | 560 |
| 1. Zyklus | 2,25 | 3,7 | 570 |
| 2. Zyklus | 2,18 | 3,4 | 560 |
| 3. Zyklus | 2,07 | 3,5 | 590 |
| 4. Zyklus | 2,22 | 3,5 | 550 |

Als Kontrollversuch wurde die gleiche Acrylfaser — jedoch ohne Ummantelung — unter analogen Bedingungen auf Hydrolysestabilität getestet. Das Ergebnis geht aus folgender Tabelle hervor :

3

|  | Titer (dtex) | Reißfestigkeit (cN/dtex) | E-Modul (cN/tex) |
|---|---|---|---|
| Ausgangswert | 1,70 | 5,0 | 850 |
| 1. Zyklus | 2,15 | 3,7 | 560 |
| 2. Zyklus | 2,38 | 3,5 | 470 |
| 3. Zyklus | 2,30 | 4,1 | 540 |
| 4. Zyklus | 2,22 | 3,5 | 520 |

Im Gegensatz zur unbehandelten Faser bleiben bei der mineralischen Faser die mechanischen Eigenschaften konstant. Aus elektronenmikroskopischen Aufnahmen geht weiter hervor, daß die unbehandelten Proben deutliche Riefen und Risse in der Oberflächenstruktur nach Zementbehandlung besitzen. Die ummantelte Faser ist völlig unbeschädigt.

Beispiel 2

6 Gew.-Teile Acrylfasern des Titers 1,6 dtex wurden wie in Beispiel 1 mit einer Lösung aus 0,4 Gew.-Teilen Kaliumpermanganat, 400 Gew.-Teilen Wasser und 8 Gew.-Teilen konz. Schwefelsäure behandelt und aufgearbeitet.

Fasereigenschaften :

| Titer | 1,6 | dtex |
|---|---|---|
| Reißfestigkeit | 4,1 | cN/dtex |
| E-Modul | 700 | cN/tex |
| Reißfestigkeit abs. | 6,6 | cN (pro Einzelfaser) |
| E-Modul abs. | 112 | cN (pro Einzelfaser) |
| Dicke der Schutzschicht | 0,05 - 0,1 | nm. |

Diese Fasern werden analog Beispiel 1 einer Zementsuspension ausgesetzt

|  | Titer (dtex) | Reißfestigkeit (cN/dtex) | E-Modul (cN/tex) |
|---|---|---|---|
| Ausgangswert | 1,60 | 4,1 | 700 |
| 1. Zyklus | 1,60 | 3,8 | 670 |
| 2. Zyklus | 1,60 | 3,9 | 660 |
| 3. Zyklus | 1,60 | 4,2 | 680 |
| 4. Zyklus | 1,50 | 4,2 | 680 |

Ergebnis :

Die behandelten Fasern ändern ihre mechanischen Kennwerte nicht, gemäß elektronenmikroskopischen Aufnahmen bleibt ihre Oberfläche unbeschädigt.

Das Resultat des Kontrollversuches mit der gleichen Acrylausgangsfaser ohne Ummantelung zeigt nachstehende Tabelle :

0 141 390

|  | Titer (dtex) | Reißfestikeit (cN/dtex) | E-Modul (cN/tex) |
|---|---|---|---|
| Ausgangswert | 1,60 | 4,1 | 700 |
| 1. Zyklus | 1,52 | 3,9 | 680 |
| 2. Zyklus | 1,62 | 3,8 | 650 |
| 3. Zyklus | 1,60 | 3,8 | 640 |
| 4. Zyklus | 1,80 | 3,8 | 580 |

Im Gegensatz zur mineralischen Faser tritt ein Abfall von Festigkeit und E-Modul und ein Titeranstieg auf. Die Faseroberfläche ist rissig.

Beispiel 3

Als Ausgangsmaterial dient eine Copolymerisatfaser aus 94 Gew.-% Acrylnitril, 5 Gew.-% Acrylsäuremethylester und 1 Gew.-% Natrium-Methallylsulfonat mit folgenden Eigenschaften :

| Titer | 3,28 | dtex |
|---|---|---|
| Reißfestigkeit | 2,4 | cN/dtex |
| E-Modul | 400 | cN/tex |
| Reißfestikeit abs. | 7,9 | cN (pro Einzelfaser) |
| E-Modul abs. | 131 | cN (pro Einzelfaser). |

3 Gew.-Teile der Fasern werden analog Beispiel 1 einer Permanganatbehandlung unterworfen. Die schwarzbraunen Fäden (Mn-Gehalt 9,8 Gew.-%) besitzen nachstehende Eigenschaften :

| Titer | 4,14 | dtex (26 Gew.-% Zunahme) |
|---|---|---|
| Reißfestigkeit | 1,9 | cN/dtex |
| E-Modul | 310 | cN/tex |
| Reißfestigkeit abs. | 7,9 | cN (pro Einzelfaser) |
| E-Modul abs. | 128 | cN (pro Einzelfaser) |
| Dicke der Schutzschicht 0,40 - 0,44 nm. | | |

Diese Fasern werden analog Beispiel 1 einer Zementsuspension ausgesetzt.

|  | Titer (dtex) | Reißfestigkeit (cN/dtex) | E-Modul (cN/tex) |
|---|---|---|---|
| Ausgangswert | 4,14 | 1,9 | 310 |
| 1. Zyklus | 4,01 | 1,8 | 315 |
| 2. Zyklus | 4,20 | 1,8 | 308 |
| 3. Zyklus | 4,10 | 2,0 | 300 |
| 4. Zyklus | 4,20 | 2,0 | 300 |

Die behandelten Fasern ändern demnach ihre mechanischen Eigenschaften nicht ; auch hier bleibt gemäß elektronenmikroskopischer Aufnahme die Faseroberfläche unbeschädigt.

Resultat des Kontrollversuches (gleiche Acrylfaser im Zementbrei ohne Ummantelung) : Abfall der Festigkeit, des E-Moduls, Anstieg des Titers, die Oberfläche wird riefig und rissig.

5

| | Titer (dtex) | Reißfestigkeit (cN/dtex) | E-Modul (cN/tex) |
|---|---|---|---|
| Ausgangswert | 3,28 | 2,4 | 400 |
| 1. Zyklus | 3,20 | 2,3 | 390 |
| 2. Zyklus | 3,14 | 2,3 | 340 |
| 3. Zyklus | 3,47 | 2,4 | 350 |
| 4. Zyklus | 3,90 | 1,6 | 320 |

Beispiel 4

Die nach Beispiel 1 erzeugte wäßrige Suspension von mineralisierten Fasern und Portlandzement wurde auf einem Sieb entwässert. Anschließend wurde weiteres, überschüssiges Wasser durch eine Filzunterlage entzogen. Die Masse wurde zu Platten geformt, die nach etwa 2 Stunden abgebunden hatten und sich nach dem Aushärten durch sehr gute mechanische Eigenschaften auszeichneten.

**Patentansprüche**

1. Formkörper mit einer durch Polyacrylnitrilfasern verstärkten Matrix aus anorganischem Material, dadurch gekennzeichnet, daß man Polyacrylnitrilfasern einsetzt, die zuvor mit einem Permanganat behandelt wurden.

2. Formkörper nach Anspruch 1, wobei die Fasern einen Titer von 0,5 bis 20 dtex, eine Festigkeit von 2,0 bis 8,0 cN/dtex und einen Modul von 300 bis 1 500 cN/tex bei einer Dehnung von 12 bis 14 % haben.

3. Formkörper nach Anspruch 1, wobei die Fasern einen Titer von 0,6 bis 6,7 dtex, eine Festigkeit von 5,0 bis 7,0 cN/dtex und einen Modul von 700 bis 1 200 cN/tex bei einer Dehnung von 12 bis 14 %.

4. Formkörper nach Anspruch 1, wobei die Fasern einen Acrylnitrilgehalt über 98 Gew.-% haben.

5. Formkörper nach Anspruch 1, wobei die Fasern aus einem Acrylnitrilhomopolymerisat bestehen.

6. Formkörper nach Anspruch 1, wobei das anorganische Material Zement ist.

7. Formkörper nach Anspruch 1, enthalten 0,5 bis 5 Gew.-% an Fasern bezogen auf anorganischen Material.

8. Verfahren zur Herstellung von Formkörpern nach Anspruch 1, dadurch gekennzeichnet, daß man die Fasern in eine wäßrige Suspension des anorganischen Materials einbringt und die Mischung aushärtet.

**Claims**

1. Mouldings with a matrix of inorganic material which is reinforced with polyacrylonitrile fibres, characterised in that polyacrylonitrile fibres are used which have previously been treated with a permanganate.

2. Mouldings according to Claim 1, wherein the fibres have a titre of 0.5 to 20 dtex, a strength of 2.0 to 8.0 cN/dtex and a modulus of 300 to 1 500 cN/tex at an elongation of 12 to 14 %.

3. Mouldings according to Claim 1, wherein the fibres have a titre of 0.6 to 6.7 dtex, a strength of 5.0 to 7.0 cN/dtex and a modulus of 700 to 1 200 cN/tex at an elongation of 12 to 14 %.

4. Mouldings according to Claim 1, wherein the fibres have an acrylonitrile content of more than 98 % by weight.

5. Mouldings according to Claim 1, wherein the fibres consist of an acrylonitrile homopolymer.

6. Mouldings according to Claim 1, wherein the inorganic material is cement.

7. Mouldings according to Claim 1, containing 0.5 to 5 % by weight of fibres, based on the inorganic material.

8. Process for the production of mouldings according to Claim 1, characterised in that the fibres are introduced into an aqueous suspension of the inorganic material and the mixture is hardened.

**Revendications**

1. Pièce moulée à matrice en matière inorganique renforcée par des fibres de polyacrylonitrile, caractérisée en ce qu'on utilise des fibres de polyacrylonitrile qui ont été prétraitées avec un permanganate.

2. Pièce moulée suivant la revendication 1, dans laquelle les fibres ont un titre de 0,5 à 20 dtex, une résistance en traction de 2,0 à 8,0 cN/dtex et un module de 300 à 1 500 cN/tex pour un allongement de 12 à 14 %.

3. Pièce moulée suivant la revendication 1, dans laquelle les fibres ont un titre de 0,6 à 6,7 dtex, une résistance en traction de 5,0 à 7,0 cN/dtex et un module de 700 à 1 200 cN/tex pour un allongement de 12 à 14 %.

4. Pièce moulée suivant la revendication 1, dans laquelle les fibres ont une teneur en acrylonitrile supérieure à 98 % en poids.

5. Pièce moulée suivant la revendication 1, dans laquelle les fibres sont formées d'un produit d'homopolymérisation de l'acrylonitrile.

6. Pièce moulée suivant la revendication 1, dans laquelle la matière inorganique est un ciment.

7. Pièce moulée suivant la revendication 1, contenant 0,5 à 5 % en poids de fibres par rapport à la matière inorganique.

8. Procédé de production de pièces moulées suivant la revendication 1, caractérisé en ce qu'on introduit les fibres dans une suspension aqueuse de la matière inorganique et on fait durcir le mélange.